# EUROPÄISCHE PATENTSCHRIFT

(11) **EP 3 726 507 B1**
(45) Veröffentlichungstag und Bekanntmachung des Hinweises auf die Patenterteilung: **26.05.2021**
(21) Anmeldenummer: 19170377.6
(22) Anmeldetag: 19.04.2019
(51) Int. Cl.: G09F 3/00

(54) **VERSIEGELUNGSFOLIE**
SEALING FILM
FEUILLE DE SCELLEMENT

(43) Veröffentlichungstag der Anmeldung: 21.10.2020
(73) Patentinhaber: Securikett Ulrich & Horn GmbH, 2482 Münchendorf (AT)
(72) Erfinder: Ulrich-Horn, Marietta, 2340 Mödling (AT)
(74) Vertreter: KLIMENT & HENHAPEL

(56) Entgegenhaltungen:
- EP-A1- 3 291 210
- EP-A2- 1 278 173
- AT-U1- 9 366
- GB-A- 2 527 508

## Beschreibung

### GEBIET DER ERFINDUNG

Versiegelungsfolie zur Applikation auf einem Untergrund, umfassend eine Trägerfolie und mehrere Funktionsschichten, wobei die Funktionsschichten mindestens zwei Farbdarstellungsschichten und mindestens zwei haftungssteuernde Schichten umfassen, wobei die Versiegelungsfolie eine Klebemittelschicht zur Befestigung am Untergrund aufweist, wobei die Funktionsschichten zwischen der Trägerfolie und der Klebemittelschicht angeordnet sind, wobei die Trägerfolie zumindest partiell von den Funktionsschichten, insbesondere von den mindestens zwei

Farbdarstellungsschichten, ablösbar ist, um die Versiegelungsfolie von einem ersten Zustand in einen zweiten Zustand zu bringen, wobei die Versiegelungsfolie im zweiten Zustand eine abgezogene Schicht und einen Rückstand umfasst, wobei im zweiten Zustand mindestens eine Symbolanordnung zumindest im Rückstand optisch sichtbar ist, welche mindestens eine Symbolanordnung in einem ersten Teilbereich und einem zweiten Teilbereich angeordnet ist, wobei die mindestens zwei haftungssteuernden Schichten vorgesehen sind, um beim Ablösen der Trägerfolie definierte Bereiche aus den mindestens zwei Farbdarstellungsschichten herauszutrennen und die mindestens eine Symbolanordnung optisch sichtbar zu machen.

### STAND DER TECHNIK

Versiegelungsfolien werden eingesetzt, um einerseits ausreichend Schutz für den Inhalt von Verpackungselementen zu bieten und um andererseits den unangetasteten Status originalverpackter Ware zu deklarieren. Ist ein Verpackungselement einmal geöffnet, hat ein Benutzer Zugriff auf dessen Inhalt und kann diesen manipulieren.

Vielfach finden daher Versiegelungsfolien Einsatz, welche im Bereich von Öffnungslaschen der Verpackungselemente angeordnet sind. In der AT 009 366 U1 wird beispielsweise eine Versiegelungsfolie offenbart, durch welche ein einmal erfolgtes Öffnen eines Verpackungselements eindeutig und irreversibel indiziert wird. Die Versiegelungsfolie weist mehrere Schichten auf, welche miteinander partiell verbunden sind. Mittels eines Ablösens einer Trägerfolie sind definierte Bereiche der Schichten, insbesondere einer Farbschicht, mit Hilfe zumindest einer Release-Lackschicht heraustrennbar. Dadurch wird an einem Emblembereich der Versiegelungsfolie ein zuvor für den Betrachter verborgenes graphisches Objekt optisch sichtbar, wodurch ein einmal erfolgtes Öffnen des Verpackungselements eindeutig und irreversibel indiziert wird.

Nachteilig bei der bekannten Versiegelungsfolie ist, dass ein allfälliger Text, wie beispielsweise die Produktkennzeichnung oder das Haltbarkeitsdatum, und/oder ein allfälliges Logo und/oder ein Bild, der/das sich im Bereich der Öffnungslasche des Verpackungselement befindet, nicht mehr lesbar/erkennbar ist, wenn die Versiegelungsfolie zumindest teilweise darauf appliziert ist.

Außerdem ist bei der bekannten Versiegelungsfolie nicht gewährleistet, dass das graphische Objekt sowohl auf einem hellen als auch auf einem dunklen Untergrund des Verpackungselements optisch gut sichtbar ist. D.h. bei Applikation der bekannten Versiegelungsfolie auf einen beispielsweise dunklen Untergrund, kann es - wenn die bekannte Versiegelungsfolie eine dunkle Farbschicht aufweist - passieren, dass das graphische Symbol optisch nicht deutlich sichtbar ist und ein Benutzer nicht erkennt, ob das Verpackungselement bereits vorab geöffnet wurde.

Weiters nachteilig bei der bekannten Versiegelungsfolie ist, dass beim Ablösen der Trägerfolie nur ein relativ kontrastarmes Symbol entsteht. Dies impliziert die Gefahr, dass der Betrachter bei einer Rückapplikation der Trägerfolie nur schwer erkennen kann, ob die Versiegelungsfolie schon abgelöst wurde, da sich manipulierte und nicht manipulierte Versiegelungsfolien kaum voneinander unterscheiden.

### AUFGABE DER ERFINDUNG

Es ist daher eine Aufgabe der vorliegenden Erfindung, eine Versiegelungsfolie zur Verfügung zu stellen, die die oben genannten Nachteile des Stands der Technik überwindet und sowohl auf einem hellen als auch auf einem dunklen Untergrund ein Ablösen optisch gut sichtbar macht. Weiters soll ein auf dem Untergrund angeordneter Text und/oder ein auf dem Untergrund angeordnetes Logo und/oder ein auf dem Untergrund angeordnetes Bild lesbar sein, auch wenn die erfindungsgemäße Versiegelungsfolie zumindest teilweise darauf appliziert ist.

### DARSTELLUNG DER ERFINDUNG

Die eingangs gestellte Aufgabe wird bei einer Versiegelungsfolie zur Applikation auf einem Untergrund, umfassend eine Trägerfolie und mehrere Funktionsschichten, wobei die Funktionsschichten mindestens zwei Farbdarstellungsschichten und mindestens zwei haftungssteuernde Schichten umfassen, wobei die Versiegelungsfolie eine Klebemittelschicht zur Befestigung am Untergrund aufweist, wobei die Funktionsschichten zwischen der Trägerfolie und der Klebemittelschicht angeordnet sind, wobei die Trägerfolie zumindest partiell von den Funktionsschichten, insbesondere von den mindestens zwei Farbdarstellungsschichten, ablösbar ist, um die Versiegelungsfolie von einem ersten Zustand in einen zweiten Zustand zu bringen, wobei die Versiegelungsfolie im zweiten Zustand eine abgezogene Schicht und einen Rückstand umfasst, wobei im zweiten Zustand mindestens eine Symbolanordnung zumindest im Rückstand optisch sichtbar ist, welche mindestens eine Symbolanordnung in einem ersten Teilbereich und einem zweiten Teilbereich angeordnet ist, wobei die mindestens zwei haftungssteuernden Schichten vorgesehen sind, um beim Ablösen der Trägerfolie definierte Bereiche aus den mindestens zwei Farbdarstellungsschichten herauszutrennen und die mindestens eine Symbolanordnung optisch sichtbar zu machen, erfindungsgemäß dadurch gelöst, dass die Funktionsschichten und die Klebemittelschicht zumindest teilweise transluzent sind und dass die Funktionsschichten mindestens eine weitere Farbdarstellungsschicht und mindestens eine weitere haftungssteuernde Schicht umfassen, wobei durch die zumindest teilweise transluzente Ausgestaltung der Funktionsschichten die mindestens eine Symbolanordnung im ersten Teilbereich auf einem hellen Untergrund optisch besser sichtbar ist als im zweiten Teilbereich und die mindestens eine Symbolanordnung im zweiten Teilbereich auf einem dunklen Untergrund optisch besser sichtbar ist als im ersten Teilbereich, wobei der helle Untergrund optisch heller ist als der dunkle Untergrund.

Der Aufbau der erfindungsgemäßen Versiegelungsfolie lässt sich wie folgt zusammenfassen: Zwischen der Trägerfolie und der Klebemittelschicht sind mehrere Funktionsschichten aufgebracht, wobei die Funktionsschichten mindestens drei Farbdarstellungsschichten und mindestens drei haftungssteuernde Schichten umfassen. Im Zuge des Ablösens der Trägerfolie entsteht im ersten und zweiten Teilbereich die mindestens eine Symbolanordnung, wobei durch die mindestens drei haftungssteuernden Schichten definierte Bereiche aus einer ersten Farbdarstellungsschicht und einer zweiten Farbdarstellungsschicht herausgetrennt werden, wodurch sich die mindestens eine Symbolanordnung ausbildet.

Im zweiten Zustand weist die erfindungsgemäße Versiegelungsfolie eine abgezogene Schicht und einen Rückstand, der auf dem Untergrund haften bleibt, auf. Die mindestens eine Symbolanordnung ist im zweiten Zustand zumindest auf dem Rückstand optisch sichtbar. Zusätzlich kann im zweiten Zustand die mindestens eine Symbolanordnung auch auf der abgezogenen Schicht optisch sichtbar sein.

Aus der weiteren Farbdarstellungsschicht werden im Zuge des Ablösens mit Hilfe der drei haftungssteuernden Schichten typischerweise keine definierten Bereiche herausgetrennt. Die weitere Farbdarstellungsschicht ist üblicherweise zumindest teilweise transparent und kann dazu dienen, die Klebemittelschicht von den restlichen Funktionsschichten zu trennen.

Es wäre auch vorstellbar, dass die weitere Farbdarstellungsschicht in einer transluzenten Farbe ausgeführt ist, wodurch die weitere Farbdarstellungsschicht im zweiten Zustand für eine Farbgebung am Rückstand sorgt.

Die mindestens eine Symbolanordnung bleibt vor einem erstmaligen Öffnen der erfindungsgemäßen Versiegelungsfolie (d.h. im ersten Zustand) für einen Betrachter großteils oder gänzlich verborgen und ist erst nach vollzogener Öffnung (d.h. im zweiten Zustand) optisch sichtbar.

Es wäre allerdings auch vorstellbar, dass bereits vor dem erstmaligen Öffnen der erfindungsgemäßen Versiegelungsfolie (d.h. im ersten Zustand) für den Betrachter eine Symbolanordnung optisch sichtbar ist, die sich allerdings nach vollzogener Öffnung (d.h. im zweiten Zustand) merkbar verändert. D.h. die Symbolanordnung ist in diesem Fall vor der erstmaligen Öffnung optisch anders als nach vollzogener Öffnung.

Selbstverständlich müssen die herausgetrennten definierten Bereiche der jeweiligen Farbdarstellungsschicht dabei nicht unmittelbar an der Trägerfolie oder an der Klebemittelschicht anhaften, sondern können diesen auch mittelbar über weitere an der Trägerfolie bzw. an der Klebemittelschicht angeordnete Funktionsschichten anhaften.

Nach dem Heraustrennen definierter Bereiche aus der ersten und zweiten Farbdarstellungsschicht durch die mindestens drei haftungssteuernden Schichten ist die mindestens eine Symbolanordnung am Rückstand im ersten Teilbereich auf einem hellen Untergrund optisch besser sichtbar ist als im zweiten Teilbereich. Im zweiten Teilbereich ist die mindestens eine Symbolanordnung wiederum auf einem dunklen Untergrund optisch besser sichtbar als im ersten Teilbereich. D.h. ein Benutzer kann - unabhängig von der Farbe bzw. Helligkeit des Untergrunds - feststellen, ob sich die erfindungsgemäße Versiegelungsfolie im zweiten Zustand befindet, da die mindestens eine Symbolanordnung in einem der beiden Teilbereiche jedenfalls gut optisch sichtbar ist.

Selbstverständlich wäre es prinzipiell auch denkbar, dass die Symbolanordnung am Rückstand im ersten Teilbereich auf einem dunklen Untergrund optisch besser sichtbar ist als im zweiten Teilbereich. Im zweiten Teilbereich ist die mindestens eine Symbolanordnung dann wiederum auf einem hellen Untergrund optisch besser sichtbar als im ersten Teilbereich.

Durch die zumindest teilweise transluzente Ausgestaltung der Funktionsschichten, insbesondere der Farbdarstellungsschichten, ist der Untergrund, auf welchen die erfindungsgemäße Versiegelungsfolie appliziert wurde, sowohl im ersten Zustand als auch im zweiten Zustand optisch sichtbar. D.h. ein allfälliger auf dem Untergrund stehender Text kann - trotz Applikation der erfindungsgemäßen Versiegelungsfolie auf diesen Text - lesbar sein.

Auf dem Untergrund kann sich neben oder statt dem Text natürlich auch ein Bild und/oder ein Logo befinden. Auch ein Bild und/oder ein Logo kann - trotz Applikation der erfindungsgemäßen Versiegelungsfolie auf das Bild und/oder das Logo - lesbar sein.

Selbstverständlich kann die erfindungsgemäße Versiegelungsfolie zusätzlich zu den beschriebenen Funktionsschichten noch eine beliebige Anzahl weiterer Funktionsschichten aufweisen, welche z.B. fertigungstechnische Vorteile oder optische Effekte zum Ziel haben, ohne von der erfindungsgemäßen Idee abzuweichen.

Durch die Funktionsschichten wird etwas optisch Wahrnehmbares, z.B. eine Farbe, ein Symbol oder ein Text, erzeugt oder es entsteht, beispielsweise mittels haftungssteuernder Schichten, ein Effekt. D.h. "Funktionsschichten" ist der Überbegriff für beispielsweise die Farbdarstellungsschichten und die haftungssteuernden Schichten.

Bei der Trägerfolie handelt es sich um eine Materialschicht. Selbstverständlich wäre es vorstellbar, dass auch die Funktionsschichten zumindest eine weitere transluzente, vorzugsweise transparente, Materialschicht umfassen.

Die Farbdarstellungsschichten wiederum können mehrere Aufbauschichten umfassen. D.h. abhängig von der Farbe einer Farbdarstellungsschicht, umfasst die Farbdarstellungsschicht eine oder mehrere Aufbauschichten.

Es wäre vorstellbar, dass die Funktionsschichten vorzugsweise im Flexodruck-, Siebdruck-, Buchdruck-, Offsetdruck- oder Digitaldruckverfahren aufeinander aufgebracht werden.

Es wäre vorstellbar, dass die Farbdarstellungsschichten unterschiedliche transluzente Farben aufweisen.

Natürlich können die Farbdarstellungsschichten jeweils auch die gleiche transluzente Farbe aufweisen. Auch in diesem Fall kann im zweiten Zustand mindestens eine Symbolanordnung sichtbar sein, da sich eine Lichtbrechung jener Teile der Farbdarstellungsschichten, welche mittels der haftungsverringernden Schichten im Zuge des Ablösens herausgetrennt worden sind, ändert.

Die Farbdarstellungsschichten können transluzent oder transparent sein. Eine transluzente Farbdarstellungsschicht ist zumindest partiell lichtdurchlässig und kann Farbpigmente enthalten. Im Gegensatz dazu ist eine transparente Farbdarstellungsschicht praktisch vollständig lichtdurchlässig und enthält keine Farbpigmente - d.h. eine solche Farbdarstellungsschicht ist farblos.

Weiters wäre es vorstellbar, dass die Farbdarstellungsschichten jeweils abschnittsweise aus unterschiedlichen transluzenten Farben, die beispielsweise streifenförmig oder rasterförmig oder in Form von Bildern und/oder Mustern angeordnet sein können, bestehen.

Es sei erwähnt, dass sich die Funktionsschichten nicht zwangsläufig über eine gesamte Fläche der erfindungsgemäßen Versiegelungsfolie, d.h. vollflächig, erstrecken müssen. D.h. es wäre vorstellbar, dass eine oder mehrere der Funktionsschichten jeweils nur abschnittsweise auf der Fläche der erfindungsgemäßen Versiegelungsfolie angeordnet sind.

Selbstverständlich kann die erfindungsgemäße Versiegelungsfolie weitere Merkmale, wie beispielsweise Sollbruch-Stanzungen und/oder Perforationen, umfassen, die einem Manipulationsnachweis dienen.

Es wäre auch denkbar, dass die erfindungsgemäße Versiegelungsfolie Merkmale, wie beispielsweise Hologrammprägungen, Markierstoffe und/oder Identitätscodes, umfasst, die einem Echtheitsnachweis dienen.

Bei einer bevorzugten Ausführungsform der erfindungsgemäßen Versieglungsfolie ist vorgesehen, dass eine erste Farbdarstellungsschicht, eine zweite Farbdarstellungsschicht und die weitere Farbdarstellungsschicht in mindestens zwei unterschiedlichen Farben ausgeführt sind.

Vorzugsweise weisen die mindestens zwei unterschiedlichen Farben sehr hohe Kontraste auf.

Im Rahmen dieser Erfindung werden auch Schwarz, Weiß und farblos bzw. transparent als Farben angesehen.

Es wäre vorstellbar, dass die erste Farbdarstellungsschicht und/oder die zweite Farbdarstellungsschicht und/oder die weitere Farbdarstellungsschicht jeweils abschnittsweise aus unterschiedlichen Farben, die beispielsweise streifenförmig angeordnet sind, bestehen.

Natürlich können die erste Farbdarstellungsschicht und/oder die zweite Farbdarstellungsschicht und/oder die weitere Farbdarstellungsschicht auch jeweils nur eine Farbe enthalten.

Weiters können - wie bereits oben geschrieben - die Farbdarstellungsschichten auch aus der gleichen Farbe bestehen.

Besonders bevorzugt ist bei der erfindungsgemäßen Versiegelungsfolie vorgesehen, dass die mindestens eine Symbolanordnung im zweiten Zustand in zumindest einer der mindestens zwei unterschiedlichen Farben der mindestens zwei Farbdarstellungsschichten und der weiteren Farbdarstellungsschicht optisch sichtbar ist. Die mindestens eine Symbolanordnung ist in diesem Fall in einer der mindestens zwei Farben der drei Farbdarstellungsschichten oder in einer Mischfarbe der mindestens zwei Farben der drei Farbdarstellungsschichten optisch sichtbar.

Eine Mischfarbe ergibt sich beispielsweise aus zwei übereinanderliegenden Farbdarstellungsschichten, wobei die obenliegende Farbdarstellungsschicht jedenfalls nicht opak sein darf. D.h. beispielsweise ergibt sich eine violette Mischfarbe, wenn eine der beiden übereinanderliegenden Farbdarstellungsschichten blau und eine andere der beiden übereinanderliegenden Farbdarstellungsschichten rot ist.

Bei einer bevorzugten Ausführungsform der erfindungsgemäßen Versieglungsfolie ist vorgesehen, dass ein erster Bereich, welcher die mindestens eine Symbolanordnung im ersten Teilbereich zumindest abschnittsweise umgibt, im zweiten Zustand in einer anderen Farbe als die mindestens eine Symbolanordnung im ersten Teilbereich optisch sichtbar ist und dass ein zweiter Bereich, welcher die mindestens eine Symbolanordnung im zweiten Teilbereich zumindest abschnittsweise umgibt, in einer anderen Farbe als die mindestens eine Symbolanordnung im zweiten Teilbereich und in einer anderen Farbe als der erste Bereich optisch sichtbar ist.

D.h. in der mindestens einen Symbolanordnung sowie im ersten Bereich und im zweiten Bereich sind im zweiten Zustand jeweils unterschiedliche Farben optisch sichtbar.

Der erste Teilbereich umfasst somit einen Teil der Symbolanordnung sowie den ersten Bereich, während der zweite Teilbereich einen anderen Teil der Symbolanordnung sowie den zweiten Bereich umfasst.

Die jeweiligen Farben sind so ausgewählt, dass die mindestens eine Symbolanordnung am Rückstand im ersten Teilbereich auf einem hellen Untergrund optisch besser sichtbar ist als im zweiten Teilbereich. Im zweiten Teilbereich ist die Farbe so gewählt, dass die mindestens eine Symbolanordnung wiederum auf einem dunklen Untergrund optisch besser sichtbar als im ersten Teilbereich.

Bevorzugt ist bei der erfindungsgemäßen Versiegelungsfolie vorgesehen, dass im zweiten Zustand mindestens zwei Symbolanordnungen zumindest teilweise optisch sichtbar sind, welche Symbolanordnungen jeweils in einem ersten Teilbereich und in einem zweiten Teilbereich angeordnet sind.

Unabhängig von der Applikationsrichtung und von der Farbe bzw. Helligkeit des Untergrunds, sind im zweiten Zustand zumindest teilweise mindestens zwei Symbolanordnungen optisch sichtbar.

Bei einer bevorzugten Ausführungsform der erfindungsgemäßen Versieglungsfolie ist vorgesehen, dass an der Trägerfolie, in Richtung der Klebemittelschicht gesehen, folgende Funktionsschichten hintereinander aufgebracht sind:
- eine erste haftungssteuernde Schicht,
- eine erste Farbdarstellungsschicht,
- eine zweite haftungssteuernde Schicht,
- eine zweite Farbdarstellungsschicht,
- die weitere haftungssteuernde Schicht,
- die weitere Farbdarstellungsschicht.

Diese Anordnung der aufeinander aufgebrachten Funktionsschichten hat sich im praktischen Versuchsfeld bewährt, um im zweiten Zustand die mindestens eine Symbolanordnung sowie den ersten Bereich auf einem hellen Untergrund optisch sichtbar zu machen und die mindestens eine Symbolanordnung sowie den zweiten Bereich auf einem dunklen Untergrund optisch sichtbar zu machen.

Selbstverständlich ist es vorstellbar, dass neben den oberhalb angeführten Funktionsschichten zumindest eine weitere Funktionsschicht vorhanden ist.

Bevorzugt ist bei der erfindungsgemäßen Versiegelungsfolie vorgesehen, dass es sich bei den haftungssteuernden Schichten um das Haftvermögen der Farbdarstellungsschichten gegenüber angrenzenden Schichten der Versiegelungsfolie vermindernde Release-Lackschichten handelt. Die haftungssteuernden Schichten umfassen die erste haftungssteuernde Schicht, die zweite haftungssteuernde Schicht sowie die weitere haftungssteuernde Schicht. Der Begriff "angrenzende Schicht" umfasst die Funktionsschichten sowie die Trägerfolie.

Für definierte Bereiche der Farbdarstellungsschichten wird ein geringeres Haftvermögen gegenüber den durch die definierten Bereiche ausgegrenzten Bereichen generiert, indem jeweils Release-Lackschichten an die Farbdarstellungsschichten angrenzen, wodurch sich die Farbdarstellungsschichten in jenen definierten Bereichen geringeren Haftvermögens nicht bleibend mit einer an die Release-Lackschicht angrenzenden Funktionsschicht, insbesondere nicht mit der Trägerfolie, verbinden und daher leicht ablösbar bleiben. Demgegenüber können sich aufgrund dieser Anordnung die durch die definierten Bereiche ausgegrenzten Bereiche der aneinandergrenzenden Schichten bleibend miteinander verbinden.

Es wäre allerdings prinzipiell auch vorstellbar, dass es sich bei den haftungssteuernden Schichten um das Haftvermögen der Farbdarstellungsschichten gegenüber angrenzenden Schichten der Versiegelungsfolie erhöhende Schichten handelt. Die Wirkungsweise wäre dann genau umgekehrt zum oben Gesagten.

Die Release-Lackschichten sind bevorzugt transluzent, besonders bevorzugt transparent.

Bei einer bevorzugten Ausführungsform der erfindungsgemäßen Versieglungsfolie ist vorgesehen, dass die Release-Lackschichten mindestens ein Silikon und/oder mindestens ein Wachs umfassen.

Mittels der Release-Lackschicht wird somit in an sich bekannter Weise das Haftvermögen derjenigen Funktionsschichten, an welche bzw. an welchen die Release-Lackschicht angrenzt, in genau bemessenem Maße herabgesetzt, sodass angrenzende Funktionsschichten in minderem Maße haftbar sind. Das Ausmaß, in welchem das Haftvermögen herabgesetzt wird, kann insbesondere über die Wahl des Release-Lacks, über die Schichtdicke und/oder über die Konzentration des mindestens einen Silikons und/oder des mindestens einen Wachses in der Release-Lackschicht gesteuert werden.

Besonders bevorzugt ist bei der erfindungsgemäßen Versiegelungsfolie vorgesehen, dass die Trägerfolie aus transparentem Kunststoff besteht. Durch die transparente Ausgestaltung des Kunststoffs sind die darunter angeordneten Farbdarstellungsschichten jederzeit gut sichtbar, und es lässt sich erkennen, ob die Farbdarstellungsschichten gleichmäßig verteilt und somit unangetastet sind, oder ob bereits definierte Bereiche in Form einer Symbolanordnung aus der Fläche der Farbdarstellungsschichten herausgetrennt wurden und somit eine Manipulation der erfindungsgemäßen Versiegelungsfolie stattgefunden hat.

Es ist außerdem vorstellbar, dass bei der erfindungsgemäßen Versiegelungsfolie eine Lasche vorgesehen ist, welche mit der Trägerfolie direkt oder indirekt verbunden ist. D.h. im Sinne eines verbesserten Bedienungskomforts weist die erfindungsgemäße Versiegelungsfolie die Lasche auf, welche auch im zweiten Zustand mit der Trägerfolie, nicht jedoch mit der Klebemittelschicht, verbunden ist.

Die Lasche dient einem Fassen der erfindungsgemäßen Versiegelungsfolie.

Beispielsweise ist die Lasche ein integraler Teil der Trägerfolie, kann jedoch auch ein separater, an der Trägerfolie durch ein geeignetes Verfahren wie Schweißen oder Kleben angebrachter Teil sein.

Es ist auch möglich, dass die Lasche ein integraler Bestandteil einer der Funktionsschichten ist bzw. durch ein geeignetes Verfahren wie Schweißen oder Kleben an einer der Funktionsschichten angebracht ist.

Es ist vorstellbar, dass im Bereich der Lasche ein Hinweiszeichen aufgedruckt ist, welches einem Benutzer diejenige Stelle anzeigt, an welcher die erfindungsgemäße Versiegelungsfolie für ein Abziehen vorteilhaft zu fassen ist.

### KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische Darstellung des strukturellen Aufbaus einer erfindungsgemäßen Versiegelungsfolie,
- Fig. 2a): eine schematische Darstellung der erfindungsgemäßen Versiegelungsfolie in einem ersten Zustand,
- Fig. 2b): eine schematische Darstellung einer abgezogenen Schicht der erfindungsgemäßen Versiegelungsfolie in einem zweiten Zustand nach einer rechtmäßigen Öffnung,
- Fig. 2c): eine schematische Darstellung eines Rückstands der erfindungsgemäßen Versiegelungsfolie im zweiten Zustand auf einem Untergrund nach der rechtmäßigen Öffnung, und
- Fig. 2d): eine schematische Darstellung einer Rückapplikation der im zweiten Zustand auf den Rückstand zurückgeklebten abgezogenen Schicht nach der rechtmäßigen Öffnung.

### WEGE ZUR AUSFÜHRUNG DER ERFINDUNG

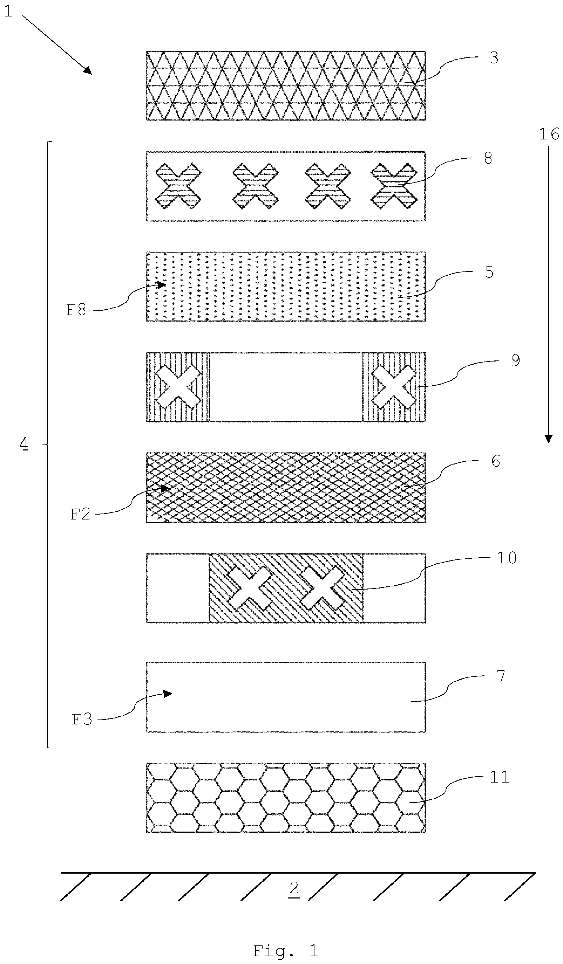

Fig. 1 zeigt eine schematische Darstellung eines strukturellen Aufbaus einer erfindungsgemäßen Versiegelungsfolie 1. Es sei erwähnt, dass im Rahmen dieser Erfindung auch Schwarz, Weiß und farblos bzw. transparent als Farben angesehen werden.

Eine in einer ersten Richtung 16 gesehen erste Schicht der erfindungsgemäßen Versiegelungsfolie 1 ist im dargestellten Ausführungsbeispiel eine Trägerfolie 3, die aus einer transparenten Kunststofffolie, vorzugsweise aus Polypropylen oder Polyethylen oder Polyethylenterephthalat, besteht. Die Kunststofffolie kann matt oder glänzend sein. Weiters wäre es vorstellbar, dass die Kunststofffolie getönt, jedoch nicht opak, ist.

Eine in der ersten Richtung 16 gesehen hinterste Schicht der erfindungsgemäßen Versiegelungsfolie 1 ist eine Klebemittelschicht 11, die auf einem Untergrund 2 anhaften kann, wobei es sich bei dem Untergrund 2 beispielsweise um ein Blatt Papier, um einen bedruckten Karton oder eine Kunststoffoberfläche handeln kann. D.h. die mittels der Klebemittelschicht 11 am Untergrund 2 applizierte erfindungsgemäße Versiegelungsfolie 1 ist vom Untergrund 2 nur unter Krafteinwirkung lösbar. Die selbstklebende Funktion der Klebemittelschicht 11 kann beispielsweise durch eine Folie geschützt sein, welche vor dem Applizieren bzw. Auftragen bzw. Anbringen der Versiegelungsfolie 1 auf dem Untergrund 2 abgezogen wird. Um eine solide Verbindung mit der Oberfläche des Untergrunds 2 zu gewährleisten, muss ein entsprechender Klebstoff, beispielsweise ein Haftkleber, eingesetzt werden. Der Haftkleber kann acrylbasiert oder kautschukbasiert sein, und er kann beispielsweise in Wasser dispergiert, in Lösungsmittel gelöst oder als Hotmelt aufgebracht sein. Alternativ könnte auch ein Heißsiegelkleber zur Herstellung einer soliden Verbindung zwischen der Versiegelungsfolie 1 und der Oberfläche des Untergrunds 2 verwendet werden.

In diesem Ausführungsbeispiel ist die Klebemittelschicht 11 vollflächig transparent ausgebildet.

Zwischen der Trägerfolie 3 und der Klebemittelschicht 11 sind folgende Funktionsschichten 4 angeordnet.

Eine erste Farbdarstellungsschicht 5 liegt in der ersten Richtung 16 gesehen hinter der Trägerfolie 3 und ist in diesem Ausführungsbeispiel vollflächig in einem transluzenten Farbton, nämlich transluzent hellblau F8, gehalten. Prinzipiell kann der transluzente Farbton jedoch beliebig gewählt werden.

Zwischen der Trägerfolie 3 und der ersten Farbdarstellungsschicht 5 ist eine erste haftungssteuernde Schicht 8, bei der es sich im gezeigten Ausführungsbeispiel um eine erste Release-Lackschicht 8, die mindestens ein Silikon und/oder mindestens ein Wachs umfasst, handelt, angeordnet.

Es sei angemerkt, dass als Release-Lackschichten 8, 9, 10 auch alternative Stoffgemische zum Einsatz kommen können. Wesentlich dabei ist jedoch, dass die Release-Lackschichten 8, 9, 10 in dem gezeigten Ausführungsbeispiel geeignete haftungsverringernde Eigenschaften aufweist, um ein Haftvermögen derjenigen Schicht (eine Funktionsschicht 4), auf welche die jeweilige Release-Lackschicht 8, 9, 10 aufgetragen wird, in genau bemessenem Maße herabsetzt, sodass angrenzende Schichten in minderem Maße anhaften bzw. haftbar sind.

Hinter der ersten Farbdarstellungsschicht 5 ist in der ersten Richtung 16 gesehen eine zweite Farbdarstellungsschicht 6 angeordnet, welche in diesem Ausführungsbeispiel vollflächig transluzent weiß F2 ist. Der transluzente Farbton der zweiten Farbdarstellungsschicht 6 kann jedoch beliebig gewählt sein. Vorzugsweise bestehen die erste Farbdarstellungsschicht 5 und die zweite Farbdarstellungsschicht 6 aus kontrastierenden transluzenten Farben, wodurch im Zuge des Ablösevorgangs bei entsprechender Anordnung der Funktionsschichten 4 mindestens eine Symbolanordnung 12 entsteht.

Zwischen der ersten Farbdarstellungsschicht 5 und der zweiten Farbdarstellungsschicht 6 ist eine zweite haftungssteuernde Schicht 9, bei der es sich im gezeigten Ausführungsbeispiel um eine zweite Release-Lackschicht 9, die mindestens ein Silikon und/oder mindestens ein Wachs umfasst, handelt, angeordnet.

Hinter der zweiten Farbdarstellungsschicht 6 ist in der ersten Richtung 16 gesehen eine weitere haftungssteuernde Schicht 10, bei der es sich im gezeigten Ausführungsbeispiel um eine weitere Release-Lackschicht 10, die mindestens ein Silikon und/oder mindestens ein Wachs umfasst, handelt, sowie eine hinter der weiteren haftungssteuernden Schicht 10 liegende weitere Farbdarstellungsschicht 7 angeordnet. Die weitere Farbdarstellungsschicht 7 ist in diesem Ausführungsbeispiel transluzent farblos F3. Der transluzente Farbton der weiteren Farbdarstellungsschicht 7 kann jedoch prinzipiell beliebig gewählt sein.

Die Funktionsschichten 4 umfassen in diesem Ausführungsbeispiel somit in der ersten Richtung 16 gesehen die erste Release-Lackschicht 8, die erste Farbdarstellungsschicht 5, die zweite Release-Lackschicht 9, die zweite Farbdarstellungsschicht 6, die weitere Release-Lackschicht 10 und die weitere Farbdarstellungsschicht 7.

Die Versiegelungsfolie 1 erscheint vor einem Aufkleben auf den Untergrund 2 transluzent blau F1. Der transluzent blaue F1 Farbton ergibt sich durch einen innigen Kontakt der Funktionsschichten 4 samt Trägerfolie 3 und Klebemittelschicht 11. Insbesondere tragen hierzu der transluzent hellblaue F8 Farbton der ersten Farbdarstellungsschicht 5 und der transluzent weiße F2 Farbton der zweiten Farbdarstellungsschicht 6 bei.

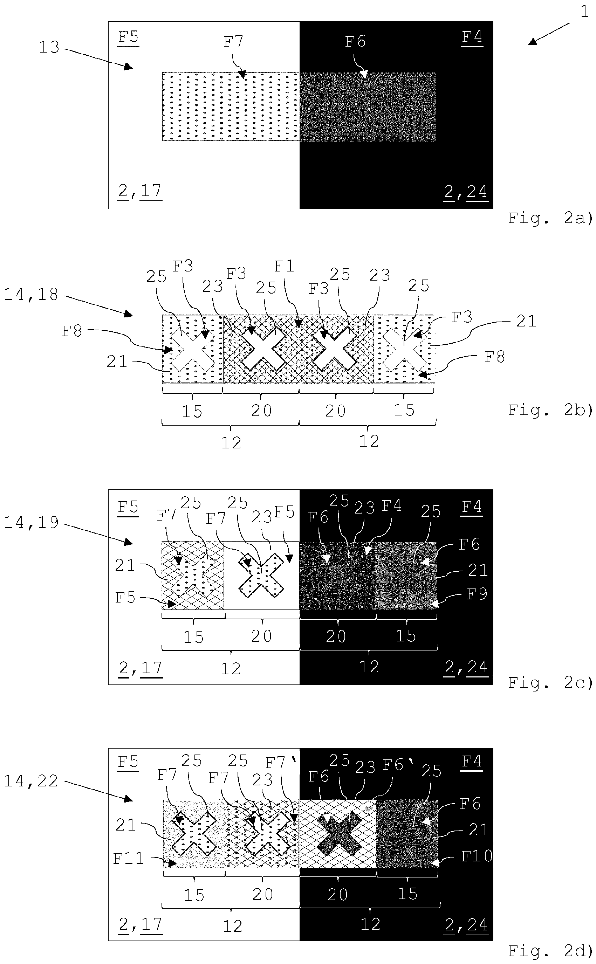

Fig. 2a) bis d) zeigen die erfindungsgemäße Versiegelungsfolie 1 in einem ersten Zustand 13 (Fig. 2a)) und in einem zweiten Zustand 14 nach einer Öffnung (Fig. 2b) bis Fig. 2d)).

Fig. 2a) zeigt eine schematische Darstellung der erfindungsgemäßen Versiegelungsfolie 1 im ersten Zustand 13, die auf einen zweifärbigen Untergrund 2 geklebt ist. Ein Bereich des Untergrunds 2 ist weiß F5, während ein anderer Bereich des Untergrunds 2 schwarz F4 ist. Der weiße F5 Bereich des Untergrunds 2 bildet einen hellen Untergrund 17 und der schwarze F4 Bereich des Untergrunds 2 einen dunklen Untergrund 24. Der helle Untergrund 17 ist dabei optisch heller als der dunkle Untergrund 24. Die erfindungsgemäße Versiegelungsfolie 1 ist dabei so auf den Untergrund 2 aufgeklebt, dass eine Hälfte der erfindungsgemäßen Versiegelungsfolie 1 auf dem weißen F5 Bereich des Untergrunds 2 angeordnet ist und eine andere Hälfte der erfindungsgemäßen Versiegelungsfolie 1 auf dem schwarzen F4 Bereich des Untergrunds 2 angeordnet ist.

Die erfindungsgemäße Versiegelungsfolie 1 ist mit Hilfe der Klebemittelschicht 11 auf dem Untergrund 2 angeordnet und ist geschlossen, d.h. sie wurde zuvor nicht manipuliert. Durch die transluzenten Funktionsschichten 4 der erfindungsgemäßen Versiegelungsfolie 1 erscheint diese auf dem schwarzen F4 Bereich des Untergrunds 2 in einem blau-schwarzen F6 Farbton, der sich aus dem schwarzen F4 Farbton des Untergrunds 2 und dem transluzent blauen F1 Farbton der Versiegelungsfolie 1 zusammensetzt. Im Gegensatz dazu erscheint die erfindungsgemäße Versiegelungsfolie 1 auf dem weißen F5 Bereich des Untergrunds 2 in einem blauen F7 Farbton, der sich aus dem weißen Farbton F5 des Untergrunds 2 und dem transluzent blauen Farbton F1 der Versiegelungsfolie 1 zusammensetzt.

Selbstverständlich wäre es vorstellbar, dass die erfindungsgemäße Versiegelungsfolie 1 im ersten Zustand 13 sowie auch im zweiten Zustand 14 andere transluzente Farbtöne und/oder Farbkombinationen aufweist.

Während des Ablösevorgangs - also beim Übergang vom ersten Zustand 13 in den zweiten Zustand 14 - trennt sich die Trägerfolie 3 partiell von den Funktionsschichten 4 ab. Im zweiten Zustand 14 besteht die erfindungsgemäße Versiegelungsfolie 1 demnach aus zwei Teilen, nämlich aus einer abgezogenen Schicht 18 und aus einem Rückstand 19, der auf dem Untergrund 2 verbleibt. Sowohl in der abgezogenen Schicht 18 als auch im Rückstand 19 sind im dargestellten Ausführungsbeispiel im zweiten Zustand 14 zwei symmetrisch angeordnete Symbolanordnungen 12 zu sehen, die jeweils in einem ersten Teilbereich 15 und in einem zweiten Teilbereich 20 angeordnet sind. Innerhalb der beiden ersten Teilbereiche 15 ist im zweiten Zustand 14 jeweils ein Symbol 25 optisch sichtbar, das von einem ersten Bereich 21 umgeben ist. Innerhalb der beiden zweiten Teilbereiche 20 ist im zweiten Zustand 14 jeweils ein Symbol 25 optisch sichtbar, das von einem zweiten Bereich 23 umgeben ist. Somit sind in der abgezogenen Schicht 18 und im Rückstand 19 im zweiten Zustand 14 jeweils vier Symbole 25 optisch sichtbar, wobei jedes in der Form eines "X" ausgeführt ist. Selbstverständlich wäre es jedoch möglich, dass die Symbole 25 jede beliebige Form aufweisen.

Fig. 2b) zeigt eine schematische Darstellung der abgezogenen Schicht 18 der erfindungsgemäßen Versiegelungsfolie 1 im zweiten Zustand 14 nach einer rechtmäßigen Öffnung. Bei der abgezogenen Schicht 18 handelt es sich um die Trägerfolie 3 inklusive der an der Trägerschicht 3 anhaftenden Farbdarstellungsschichten 5,6 im zweiten Zustand 14.

Fig. 2c) zeigt eine schematische Darstellung des Rückstands 19 der erfindungsgemäßen Versiegelungsfolie 1 im zweiten Zustand 14 auf dem Untergrund 2 nach der rechtmäßigen Öffnung. Bei dem Rückstand 19 handelt es sich um die auf dem Untergrund 2 verbliebenen Teile der Funktionsschichten 4 plus Klebemittelschicht 11 im zweiten Zustand 14.

Im zweiten Zustand 14 sind nun sowohl in der abgezogenen Schicht 18 als auch im Rückstand 19 zwei Symbolanordnungen 12, die beim Ablösen der Trägerfolie 3 entstehen und vier Symbole 25 umfassen, optisch sichtbar.

Im Rückstand 19 (vgl. Fig. 2c)) befindet sich eine der beiden Symbolanordnungen 12 auf dem weißen F5 Bereich des Untergrunds 2 (also am hellen Untergrund 17) und die andere der beiden Symbolanordnungen 12 auf dem schwarzen F2 Bereich des Untergrunds 2 (also am dunklen Untergrund 20).

Es sei besonders hervorgehoben, dass sich die Farben, die im zweiten Zustand 14 am auf dem Untergrund 2 haftenden Rückstand 19 optisch sichtbar sind, aus den Farbtönen der auf dem Untergrund 2 verbliebenen Teile der transluzenten Funktionsschichten 4 und aus dem Farbton des Untergrund 2 zusammensetzen.

Die erste Release-Lackschicht 8 sorgt für die farbliche Ausbildung der vier Symbole 25. Auf der abgezogenen Schicht 18 sind alle vier Symbole 12 in einem transluzent farblosen F3 Farbton optisch sichtbar. Am Rückstand 19 wiederum ist der Farbton der Symbole 25 von dem Farbton des Untergrunds 2 abhängig. Jene zwei Symbole 25, die sich auf dem schwarzen F4 Untergrund 2 befinden, sind am Rückstand 19 in einem blau-schwarzen F6 Farbton (setzt sich aus dem transluzent blauen F1 Gesamtfarbton der Farbdarstellungsschichten 5,6,7 sowie aus dem schwarzen F4 Farbton des Untergrunds 2 zusammen) optisch sichtbar. Die zwei Symbole 25, die sich auf dem weißen F5 Untergrund 2 befinden, sind am Rückstand 19 in einem blauen F7 Farbton (setzt sich aus dem transluzent blauen F1 Gesamtfarbton der Farbdarstellungsschichten 5,6,7 sowie aus dem weißen F5 Farbton des Untergrunds 2 zusammen) optisch sichtbar.

Die zweite Release-Lackschicht 9 sorgt dafür, dass die ersten Bereiche 21 der zweiten Farbdarstellungsschicht 6 und der weiteren Farbdarstellungsschicht 7, welche ersten Bereiche 21 die beiden Symbole 25 in den ersten Teilbereichen 15 umgeben, auf dem Rückstand 19 verbleiben. Dementsprechend sind auf der abgezogenen Schicht 18 die ersten Bereiche 21 in einem transluzent hellblauen F8 Farbton optisch sichtbar. Am Rückstand 19 wiederum ist der Farbton der ersten Bereiche 21 von dem Farbton des Untergrunds 2 abhängig. Der ersten Bereich 21, der sich auf dem schwarzen F4 Untergrund 2 befindet, ist am Rückstand 19 in einem grauen F9 Farbton (setzt sich aus dem transluzent weißen F2 und transluzent farblosen F3 Farbton der Farbdarstellungsschichten 6,7 sowie aus dem schwarzen F4 Farbton des Untergrunds 2 zusammen) optisch sichtbar. Der erste Bereich 21, der sich auf dem weißen F5 Untergrund 2 befindet, ist am Rückstand 19 in einem weißen F5 Farbton (setzt sich aus dem transluzent weißen F2 und transluzent farblosen F3 Farbton der Farbdarstellungsschichten 6,7 sowie aus dem weißen F5 Farbton des Untergrunds 2 zusammen) optisch sichtbar.

Die weitere Release-Lackschicht 10 ist dafür verantwortlich, dass die zweiten Bereiche 23 der Farbdarstellungsschicht 7, welche zweiten Bereiche 23 die beiden Symbole 25 in den zweiten Teilbereichen 20 umgeben, auf dem Rückstand 19 verbleiben. Dementsprechend sind auf der abgezogenen Schicht 18 die zweiten Bereiche 23 in einem transluzent blauen F1 Farbton optisch sichtbar. Am Rückstand 19 wiederum ist der Farbton der zweiten Bereiche 23 von dem Farbton des Untergrunds 2 abhängig. Der zweite Bereich 23, der sich auf dem schwarzen F4 Untergrund 2 befindet, ist am Rückstand 19 in einem schwarzen F4 Farbton (setzt sich aus dem transluzent farblosen F3 Farbton der Farbdarstellungsschicht 7 sowie aus dem schwarzen F4 Farbton des Untergrunds 2 zusammen) optisch sichtbar. Der zweite Bereich 23, der sich auf dem weißen F5 Untergrund 2 befindet, ist am Rückstand 19 in einem weißen F5 Farbton (setzt sich aus dem transluzent farblosen F3 Farbton der Farbdarstellungsschicht 7 sowie aus dem weißen F5 Farbton des Untergrunds 2 zusammen) optisch sichtbar.

Fig. 2d) zeigt eine schematische Darstellung einer Rückapplikation 22 der im zweiten Zustand 14 auf den Rückstand 19 zurückgeklebten abgezogenen Schicht 18 nach dem Ablösen. Es ist erkennbar, dass die Symbolanordnungen 12 auch nach der Rückapplikation 22 der abgezogenen Schicht 18 auf den Rückstand 19 sichtbar sind. D.h. die der Rückapplikation 22 vorhergegangene Manipulation der erfindungsgemäßen Versiegelungsfolie 1 wird durch eine eindeutige Kennzeichnung des zweiten Zustands 14 angezeigt, indem die Symbolanordnungen 12 auch nach der Rückapplikation 22 sichtbar sind.

Die Bereiche, die sich nach der Rückapplikation 22 übereinander befinden, ergeben keine "kräftigen" Mischfarben, da sich bei der Rückapplikation 22 kein inniger Kontakt zwischen den Funktionsschichten 4 einstellt. Durch das Ablösen der Trägerfolie 3 inklusive der an der Trägerfolie 3 anhaftenden Farbdarstellungsschichten 5,6 entstehen raue Oberflächen zwischen der abgezogenen Schicht 18 und dem Rückstand 19. Bei der Rückapplikation 22 kann somit, wie oben beschrieben, kein inniger Kontakt zwischen der abgezogenen Schicht 18 und dem Rückstand 19 hergestellt werden. Zusätzlich sammelt sich im Zuge der Rückapplikation 22 zwischen der abgezogenen Schicht 18 und dem Rückstand 19 Luft, die nach der Rückapplikation 22 nicht mehr vollständig entweichen kann, was ebenfalls dazu beiträgt, dass die Farbtöne optisch verändert sichtbar sind.

Auf der Rückapplikation 22 sind die zwei Symbole 25, die sich auf dem schwarzen F4 Untergrund 2 befinden, in einem blau-schwarzen F6 Farbton (setzt sich aus dem transluzent farblosen F3 Farbton der Symbole 25 auf der abgezogenen Schicht 18 sowie aus dem blau-schwarzen F6 Farbton der Symbole 25 am Rückstand 19 zusammen) optisch sichtbar. Die zwei Symbole 25, die sich auf dem weißen F5 Untergrund 2 befinden, sind in einem blauen F7 Farbton (setzt sich aus dem transluzent farblosen F3 Farbton der Symbole 25 auf der abgezogenen Schicht 18 sowie aus dem blauen F7 Farbton der Symbole 25 am Rückstand 19 zusammen) optisch sichtbar.

Der erste Bereich 21, der sich auf dem schwarzen F4 Untergrund 2 befindet, ist auf der Rückapplikation 22 in einem hellblaugrauen F10 Farbton (setzt sich aus dem transluzent hellblauen F8 Farbton des ersten Bereichs 21 auf der abgezogenen Schicht 18 sowie aus dem grauen F9 Farbton des ersten Bereichs 21 am Rückstand 19 zusammen) optisch sichtbar. Der erste Bereich 21, der sich auf dem weißen F5 Untergrund 2 befindet, ist auf der Rückapplikation 22 in einem hellblauen F11 Farbton (setzt sich aus dem transluzent hellblauen F8 Farbton des ersten Bereichs 21 auf der abgezogenen Schicht 18 sowie aus dem weißen F5 Farbton des ersten Bereichs 21 am Rückstand 19 zusammen) optisch sichtbar.

Der zweite Bereich 23, der sich auf dem schwarzen F4 Untergrund 2 befindet, ist auf der Rückapplikation 22 in einem blau-schwarzen F6' Farbton (setzt sich aus dem transluzent blauen F1 Farbton des zweiten Bereichs 23 auf der abgezogenen Schicht 18 sowie aus dem schwarzen F4 Farbton des zweiten Bereichs 23 am Rückstand 19 zusammen) optisch sichtbar. Der blau-schwarze F6' Farbton des zweiten Bereichs 23 unterscheidet sich geringfügig von dem blau-schwarzen F6 Farbton der Symbole 25, die sich auf dem schwarzen F4 Untergrund 2 befinden. Dies u.a. deshalb, da sich bei der Rückapplikation 22 - wie oben beschrieben - keine kräftigen Mischfarben ergeben, da sich kein inniger Kontakt zwischen den Funktionsschichten 4 einstellt.

Der zweite Bereich 23, der sich auf dem weißen F5 Untergrund 2 befindet, ist auf der Rückapplikation 22 in einem blauen F7' Farbton (setzt sich aus dem transluzent blauen F1 Farbton des zweiten Bereichs 23 auf der abgezogenen Schicht 18 sowie aus dem weißen F5 Farbton des zweiten Bereichs 23 am Rückstand 19 zusammen) optisch sichtbar. Auch hier unterscheidet sich der blaue F7' Farbton des zweiten Bereichs 23 geringfügig von dem blauen F7 Farbton der Symbole 25, die sich auf dem weißen F5 Untergrund befinden, aus den oben genannten Gründen.

Somit ist - unabhängig davon, ob die erfindungsgemäße Versiegelungsfolie 1 auf einen dunklen oder hellen Untergrund 2 geklebt ist - im zweiten Zustand 14 sowohl am Rückstand 19 als auch nach der Rückapplikation 22 ein Teilbereich 15,20 besser sichtbar als der andere Teilbereich 20, 15. Dadurch kann ein Benützer sofort erkennen, ob sich die erfindungsgemäße Versiegelungsfolie 1 im ersten Zustand 13 oder im zweiten Zustand 14 befindet.

Außerdem kann ein Benützer - unabhängig davon ob sich die erfindungsgemäße Versiegelungsfolie 1 im ersten Zustand 13 oder im zweiten Zustand 14 befindet - einen auf dem Untergrund angeordneten Text, über welchem die erfindungsgemäße Versiegelungsfolie angeordneten ist, prinzipiell lesen, sofern der Kontrast zwischen der Farbe des Untergrunds 2 und der Farbe des Texts stark genug ist. Selbiges gilt natürlich auch für ein Logo und/oder ein Bild.

### BEZUGSZEICHENLISTE

- 1: Versiegelungsfolie
- 2: Untergrund
- 3: Trägerfolie
- 4: Funktionsschichten
- 5: Erste Farbdarstellungsschicht
- 6: Zweite Farbdarstellungsschicht
- 7: Weitere Farbdarstellungsschicht
- 8: Erste haftungssteuernde Schicht bzw. erste Release-Lackschicht
- 9: Zweite haftungssteuernde Schicht bzw. zweite Release-Lackschicht
- 10: Weitere haftungssteuernde Schicht bzw. weitere Release-Lackschicht
- 11: Klebemittelschicht
- 12: Symbolanordnung
- 13: Erster Zustand
- 14: Zweiter Zustand
- 15: Erster Teilbereich
- 16: Erste Richtung
- 17: Heller Untergrund
- 18: Abgezogene Schicht
- 19: Rückstand
- 20: Zweiter Teilbereich
- 21: Erster Bereich
- 22: Rückapplikation
- 23: Zweiter Bereich
- 24: Dunkler Untergrund
- 25: Symbol
- F1: Transluzent blau
- F2: Transluzent weiß
- F3: Transparent
- F4: Schwarz
- F5: Weiß
- F6, F6': Blau-schwarz
- F7, F7': Blau
- F8: Transluzent hellblau
- F9: Grau
- F10: Hellblau-grau
- F11: Hellblau

## Patentansprüche

1. Versiegelungsfolie (1) zur Applikation auf einem Untergrund (2), umfassend eine Trägerfolie (3) und mehrere Funktionsschichten (4), wobei die Funktionsschichten (4) mindestens zwei Farbdarstellungsschichten (5,6) und mindestens zwei haftungssteuernde Schichten (8,9) umfassen, wobei die Versiegelungsfolie (1) eine Klebemittelschicht (11) zur Befestigung am Untergrund (2) aufweist, wobei die Funktionsschichten (4) zwischen der Trägerfolie (3) und der Klebemittelschicht (11) angeordnet sind, wobei die Trägerfolie (3) zumindest partiell von den Funktionsschichten (4), insbesondere von den mindestens zwei Farbdarstellungsschichten (5,6), ablösbar ist, um die Versiegelungsfolie (1) von einem ersten Zustand (13) in einen zweiten Zustand (14) zu bringen, wobei die Versiegelungsfolie (1) im zweiten Zustand (14) eine abgezogene Schicht (18) und einen Rückstand (19) umfasst, wobei im zweiten Zustand (14) mindestens eine Symbolanordnung (12) zumindest im Rückstand (19) optisch sichtbar ist, welche mindestens eine Symbolanordnung (12) in einem ersten Teilbereich (15) und einem zweiten Teilbereich (20) angeordnet ist, wobei die mindestens zwei haftungssteuernden Schichten (8,9) vorgesehen sind, um beim Ablösen der Trägerfolie (3) definierte Bereiche aus den mindestens zwei Farbdarstellungsschichten (5,6) herauszutrennen und die mindestens eine Symbolanordnung (12) optisch sichtbar zu machen, **dadurch gekennzeichnet, dass** die Funktionsschichten (4) und die Klebemittelschicht (11) zumindest teilweise transluzent sind und dass die Funktionsschichten (4) mindestens eine weitere Farbdarstellungsschicht (7) und mindestens eine weitere haftungssteuernde Schicht (10) umfassen, wobei durch die zumindest teilweise transluzente Ausgestaltung der Funktionsschichten (4) die mindestens eine Symbolanordnung (12) im ersten Teilbereich (15) auf einem hellen Untergrund (17) optisch besser sichtbar ist als im zweiten Teilbereich (20) und die mindestens eine Symbolanordnung (12) im zweiten Teilbereich (20) auf einem dunklen Untergrund (24) optisch besser sichtbar ist als im ersten Teilbereich (15), wobei der helle Untergrund (17) optisch heller ist als der dunkle Untergrund (24).

2. Versiegelungsfolie (1) nach Anspruch 1, **dadurch gekennzeichnet, dass** eine erste Farbdarstellungsschicht (5), eine zweite Farbdarstellungsschicht (6) und die weitere Farbdarstellungsschicht (7) in mindestens zwei unterschiedlichen Farben ausgeführt sind.

3. Versiegelungsfolie (1) nach Anspruch 2, **dadurch gekennzeichnet, dass** die mindestens eine Symbolanordnung (12) im zweiten Zustand (14) in zumindest einer der mindestens zwei unterschiedlichen Farben der mindestens zwei Farbdarstellungsschichten (5,6) und der weiteren Farbdarstellungsschicht (7) optisch sichtbar ist.

4. Versiegelungsfolie (1) nach einem der Ansprüche 1 bis 3, **dadurch gekennzeichnet, dass** ein erster Bereich (21), welcher die mindestens eine Symbolanordnung (12) im ersten Teilbereich (15) zumindest abschnittsweise umgibt, im zweiten Zustand (14) in einer anderen Farbe als die mindestens eine Symbolanordnung (12) im ersten Teilbereich (15) optisch sichtbar ist und dass ein zweiter Bereich (23), welcher die mindestens eine Symbolanordnung (12) im zweiten Teilbereich (20) zumindest abschnittsweise umgibt, in einer anderen Farbe als die mindestens eine Symbolanordnung (12) im zweiten Teilbereich (20) und in einer anderen Farbe als der erste Bereich (21) optisch sichtbar ist.

5. Versiegelungsfolie (1) nach einem der Ansprüche 1 bis 4, **dadurch gekennzeichnet, dass** im zweiten Zustand (14) mindestens zwei Symbolanordnungen (12) zumindest teilweise optisch sichtbar sind, welche Symbolanordnungen (12) jeweils in einem ersten Teilbereich (15) und in einem zweiten Teilbereich (20) angeordnet sind.

6. Versiegelungsfolie (1) nach einem der Ansprüche 1 bis 5, **dadurch gekennzeichnet, dass** an der Trägerfolie (3), in Richtung der Klebemittelschicht (11) gesehen, folgende Funktionsschichten (4) hintereinander aufgebracht sind:
- eine erste haftungssteuernde Schicht (8),
- eine erste Farbdarstellungsschicht (5),
- eine zweite haftungssteuernde Schicht (9),
- eine zweite Farbdarstellungsschicht (6),
- die weitere haftungssteuernde Schicht (10),
- die weitere Farbdarstellungsschicht (7).

7. Versiegelungsfolie (1) nach einem der Ansprüche 1 bis 6, **dadurch gekennzeichnet, dass** es sich bei den haftungssteuernden Schichten (8, 9, 10) um das Haftvermögen der Farbdarstellungsschichten (5,6,7) gegenüber angrenzenden Schichten der Versiegelungsfolie (1) vermindernde Release-Lackschichten (8, 9, 10) handelt.

8. Versiegelungsfolie (1) nach Anspruch 7, **dadurch gekennzeichnet, dass** die Release-Lackschichten (8,9,10) mindestens ein Silikon und/oder mindestens ein Wachs umfassen.

9. Versiegelungsfolie (1) nach einem der Ansprüche 1 bis 8, **dadurch gekennzeichnet, dass** die Trägerfolie (3) aus transparentem Kunststoff besteht.

## Claims

1. Sealing film (1) for application to a substrate (2), comprising a carrier film (3) and a plurality of functional layers (4), wherein the functional layers (4) comprise at least two color display layers (5, 6) and at least two adhesion-controlling layers (8, 9), wherein the sealing film (1) has an adhesive layer (11) for fastening to the substrate (2), wherein the functional layers (4) are arranged between the carrier film (3) and the adhesive layer (11), wherein the carrier film (3) is at least partially detachable from the functional layers (4), in particular from the at least two color display layers (5, 6), in order to bring the sealing film (1) from a first state (13) into a second state (14), wherein the sealing film (1) comprises, in the second state (14), a peeled-off layer (18) and a residue (19), wherein, in the second state (14), at least one symbol arrangement (12) is optically visible at least in the residue (19), which at least one symbol arrangement (12) is arranged in a first partial region (15) and a second partial region (20), wherein the at least two adhesion-controlling layers (8, 9) are provided in order to separate defined regions from the at least two color display layers (5, 6) and to make the at least one symbol arrangement (12) optically visible when the carrier film (3) is detached, **characterized in that** the functional layers (4) and the adhesive layer (11) are at least partially translucent, and **in that** the functional layers (4) comprise at least one further color display layer (7) and at least one further adhesion-controlling layer (10), wherein, as a result of the at least partially translucent design of the functional layers (4), the at least one symbol arrangement (12) is optically more visible in the first partial region (15) on a light background (17) than in the second partial region (20) and the at least one symbol arrangement (12) is optically more visible in the second partial region (20) on a dark background (24) than in the first partial region (15), wherein the light background (17) is optically lighter than the dark background (24).

2. Sealing film (1) according to claim 1, **characterized in that** a first color display layer (5), a second color display layer (6) and the further color display layer (7) are designed in at least two different colors.

3. Sealing film (1) according to claim 2, **characterized in that** the at least one symbol arrangement (12) is optically visible in the second state (14) in at least one of the at least two different colors of the at least two color display layers (5, 6) and the further color display layer (7).

4. Sealing film (1) according to one of claims 1 to 3, **characterized in that** a first region (21), which surrounds the at least one symbol arrangement (12) in the first partial region (15) at least in sections, is optically visible in the second state (14) in a different color than the at least one symbol arrangement (12) in the first partial region (15), and **in that** a second region (23), which surrounds the at least one symbol arrangement (12) in the second partial region (20) at least in sections, is optically visible in a different color than the at least one symbol arrangement (12) in the second partial region (20) and in a different color than the first region (21).

5. Sealing film (1) according to one of claims 1 to 4, **characterized in that** at least two symbol arrangements (12) are at least partially optically visible in the second state (14), which symbol arrangements (12) are arranged in each case in a first partial region (15) and in a second partial region (20).

6. Sealing film (1) according to one of claims 1 to 5, **characterized in that** the following functional layers (4) are applied in succession to the carrier film (3), as viewed in the direction of the adhesive layer (11):
- a first adhesion-controlling layer (8),
- a first color display layer (5),
- a second adhesion-controlling layer (9),
- a second color display layer (6),
- the further adhesion-controlling layer (10),
- the further color display layer (7).

7. Sealing film (1) according to one of claims 1 to 6, **characterized in that** the adhesion-controlling layers (8, 9, 10) are release lacquer layers (8, 9, 10) which reduce the adhesive power of the color display layers (5, 6, 7) in relation to adjoining layers of the sealing film (1).

8. Sealing film (1) according to claim 7, **characterized in that** the release lacquer layers (8,9,10) comprise at least one silicone and/or at least one wax.

9. Sealing film (1) according to one of claims 1 to 8, **characterized in that** the carrier film (3) consists of transparent plastic.

## Revendications

1. Film de scellement (1) destiné à être appliqué sur un fond (2), comprenant un film support (3) et plusieurs couches fonctionnelles (4), dans lequel les couches fonctionnelles (4) comprennent au moins deux couches de présentation de couleur (5, 6) et au moins deux couches de commande d'adhérence (8, 9), dans lequel le film de scellement (1) présente une couche d'adhésif (11) pour la fixation sur le fond (2), dans lequel les couches fonctionnelles (4) sont disposées entre le film support (3) et la couche d'adhésif (11), dans lequel le film support (3) est au moins partiellement détachable des couches fonctionnelles (4), en particulier desdites au moins deux couches de présentation de couleur (5, 6), pour faire passer le film de scellement (1) d'un premier état (13) dans un deuxième état (14), dans lequel le film de scellement (1) comprend, dans le deuxième état (14), une couche retirée (18) et un résidu (19), dans lequel au moins un agencement de symboles (12) est optiquement visible au moins dans le résidu (19) dans le deuxième état (14), lequel au moins un agencement de symboles (12) est disposé dans une première zone partielle (15) et une deuxième zone partielle (20), dans lequel lesdites au moins deux couches de commande d'adhérence (8, 9) sont prévues pour séparer des zones définies desdites au moins deux couches de présentation de couleur (5, 6) lorsque le film support (3) est détaché et pour rendre optiquement visible ledit au moins un agencement de symboles (12), **caractérisé en ce que** les couches fonctionnelles (4) et la couche d'adhésif (11) sont au moins partiellement translucides et **en ce que** les couches fonctionnelles (4) comprennent au moins une couche de présentation de couleur supplémentaire (7) et au moins une couche de commande d'adhérence supplémentaire (10), dans lequel, en raison de la conception au moins partiellement translucide des couches fonctionnelles (4), ledit au moins un agencement de symboles (12) est optiquement plus visible dans la première zone partielle (15) sur un fond clair (17) que dans la deuxième zone partielle (20) et ledit au moins un agencement de symboles (12) est optiquement plus visible dans la deuxième zone partielle (20) sur un fond sombre (24) que dans la première zone partielle (15), le fond clair (17) étant optiquement plus clair que le fond sombre (24).

2. Film de scellement (1) selon la revendication 1, **caractérisé en ce qu'**une première couche de présentation de couleur (5), une deuxième couche de présentation de couleur (6) et la couche de présentation de couleur supplémentaire (7) sont réalisées en au moins deux couleurs différentes.

3. Film de scellement (1) selon la revendication 2, **caractérisé en ce que** ledit au moins un agencement de symboles (12) est optiquement visible dans le deuxième état (14) dans au moins une desdites au moins deux couleurs différentes desdites au moins deux couches de présentation de couleur (5, 6) et de la couche de présentation de couleur supplémentaire (7).

4. Film de scellement (1) selon l'une des revendications 1 à 3, **caractérisé en ce qu'**une première zone (21), qui entoure au moins sur certaines parties ledit au moins un agencement de symboles (12) dans la première zone partielle (15), est, dans le deuxième état (14), optiquement visible dans une autre couleur que ledit au moins un agencement de symboles (12) dans la première zone partielle (15) et **en ce qu'**une deuxième zone (23), qui entoure au moins sur certaines parties ledit au moins un agencement de symboles (12) dans la deuxième zone partielle (20), est optiquement visible dans une autre couleur que ledit au moins un agencement de symboles (12) dans la deuxième zone partielle (20) et dans une autre couleur que la première zone (21).

5. Film de scellement (1) selon l'une des revendications 1 à 4, **caractérisé en ce que**, dans le deuxième état (14), au moins deux agencements de symboles (12) sont au moins partiellement optiquement visibles, lesquels agencements de symboles (12) sont disposés respectivement dans une première zone partielle (15) et dans une deuxième zone partielle (20).

6. Film de scellement (1) selon l'une des revendications 1 à 5, **caractérisé en ce que** les couches fonctionnelles (4) suivantes sont appliquées successivement sur le film support (3), vu en direction de la couche d'adhésif (11) :
- une première couche de commande d'adhérence (8),
- une première couche de présentation de couleur (5),
- une deuxième couche de commande d'adhérence (9),
- une deuxième couche de présentation de couleur (6),
- la couche de commande d'adhérence supplémentaire (10),
- la couche de présentation de couleur supplémentaire (7).

7. Film de scellement (1) selon l'une des revendications 1 à 6, **caractérisé en ce que** les couches de commande d'adhérence (8, 9, 10) sont des couches de vernis de séparation (8, 9, 10) réduisant le pouvoir adhésif des couches de présentation de couleur (5, 6, 7) par rapport aux couches adjacentes du film de scellement (1).

8. Film de scellement (1) selon la revendication 7, **caractérisé en ce que** les couches de vernis de séparation (8, 9, 10) comprennent au moins un silicone et/ou au moins une cire.

9. Film de scellement (1) selon l'une des revendications 1 à 8, **caractérisé en ce que** le film support (3) est constitué d'une matière plastique transparente.
